# FASCICULE DE BREVET EUROPEEN

(11) **EP 4 367 592 B1**
(45) Date de publication et mention de la délivrance du brevet: **03.12.2025**
(21) Numéro de dépôt: 22751139.1
(22) Date de dépôt: 08.07.2022
(51) Int. Cl.: G06F 21/77

(54) **PROCEDE DE TRAITEMENT DE L'EXECUTION D'UNE FONCTION D'UN APPLET, ET PROCEDE DE CHARGEMENT CORRESPONDANT**
VERFAHREN ZUR HANDHABUNG DER AUSFÜHRUNG EINER APPLET-FUNKTION UND ENTSPRECHENDES LADEVERFAHREN
METHOD FOR HANDLING THE EXECUTION OF AN APPLET FUNCTION, AND CORRESPONDING LOADING METHOD

(30) Priorité: 09.07.2021 FR 2107461
(43) Date de publication de la demande: 15.05.2024
(73) Titulaire: IDEMIA France, 92400 Courbevoie (FR)
(72) Inventeur: CHAMLEY, Olivier, 92400 Courbevoie (FR); GRENECHE, Hugo, 92400 Courbevoie (FR)
(74) Mandataire: Idemia
(86) Numéro de dépôt international: PCT/FR2022/051377
(87) Numéro de publication internationale: WO 2023/281232

(56) Documents cités:
- EP-A1- 2 879 074
- JACOBS BART ET AL: "The VeriFast Program Verifier A Tutorial for Java Card Developers", 19 September 2011 (2011-09-19), XP055895106, Retrieved from the Internet <URL:https://people.cs.kuleuven.be/~bart.jacobs/verifast/javacard-tutorial.pdf> [retrieved on 20220224]
- "Java Card 3 Platform, Version 3.0.3 Classic Edition", no. ; 20101001, 19 September 2017 (2017-09-19), XP051351201, Retrieved from the Internet <URL:http://www.3gpp.org/ftp/tsg_ct/WG6_Smartcard_Ex-T3/API/> [retrieved on 20170919]

## Description

### Domaine Technique

L'invention concerne l'exécution de fonctions dans des dispositifs électroniques, et en particulier des fonctions dont l'exécution peut poser des problèmes de sécurité. L'invention concerne également le chargement d'instructions contenant ces fonctions dans les dispositifs électroniques.

### Technique antérieure

Les dispositifs électroniques tels que les cartes à puces peuvent embarquer des systèmes d'exploitation Java Card. Dans ces systèmes d'exploitation, des applets peuvent être exécutées par des machines virtuelles (« Java Card Virtual Machine » en anglais). En fait, on appelle applet les applications exécutées par une machine virtuelle.

Des mécanismes de sécurité sont prévus à la fois en dehors de la carte, par exemple avant le chargement de l'applet dans la carte (vérification dite « off-card » en anglais), et au sein de la carte (vérification dite « on-card » en anglais).

On connait la vérification de bytecode Java Card qui comporte notamment des vérifications off-card sur des fichiers convertis d'applet (« converted applet »). Cette vérification consiste en une vérification de la validité des fichiers convertis d'applet qui vont être chargés dans les cartes. Les documents Jacobs Bart et al: "The VeriFast Program Verifier A Tutorial for Java Card Developers", 19 septembre 2011; et EP2879074 A1 constituent des éléments pertinents de l'état de l'art.

Des problèmes de sécurité peuvent apparaître une fois les applets chargées dans les cartes. En particulier, il a été observé que des applets peuvent manipuler des données qui ne devraient pas l'être.

L'invention vise à améliorer la sécurité de l'exécution des applets.

### Exposé de l'invention

A cet effet, l'invention propose un procédé de traitement de l'exécution d'une fonction d'une applet par un dispositif électronique comprenant :
- une réception (par exemple par le dispositif électronique) d'une demande d'exécution de la fonction (par exemple pour qu'elle soit exécutée par le dispositif électronique),
- une vérification (par exemple par le dispositif électronique)d'un type associé à la fonction,
- si le type de la fonction est un type donné, on détermine (par exemple par le dispositif électronique) des informations relatives aux arguments traités et/ou aux données délivrées par la fonction,
- on observe (par exemple par le dispositif électronique) le déroulement de la fonction (par exemple lors de son exécution par le dispositif électronique suite à la réception de la demande d'exécution) et si la fonction traite des données en désaccord avec les informations relatives aux arguments traités et/ou aux données délivrées par la fonction, on met en œuvre un traitement de sécurité.

Les inventeurs de la présente invention ont observé qu'il est possible d'enregistrer dans le code des applets des informations qui indiquent quels seront les arguments traités ou les données délivrées par une fonction, pour ensuite permettre de mettre en œuvre une vérification.

Un désaccord peut comprendre une manipulation de données non prévues dans les informations relatives aux arguments traités et/ou aux données délivrées par la fonction, typiquement une écriture dans une zone de mémoire non prévue ou une délivrance d'un objet d'un type non prévu.

En outre, les inventeurs ont observé que les problèmes présentés ci-dessus concernent des fonctions particulières (par exemple du type donné).

Selon un mode de mise en œuvre particulier, le type donné est une fonction qui s'exécute directement sur le processeur du dispositif électronique en dehors d'une machine virtuelle qui exécute l'applet.

Il a été observé que les fonctions qui s'exécutent sur le processeur ne sont généralement pas testées dans la vérification off-card, et que ces fonctions manipulent des objets en dehors de la machine virtuelle, ce qui peut être problématique. De ce fait, il est particulièrement intéressant de détecter ces fonctions.

Selon un mode de mise en œuvre particulier, le type donné est une fonction native et la machine virtuelle est une machine virtuelle Java Card.

L'invention est bien adaptée pour les fonctions natives qui s'exécutent sur le processeur du dispositif électronique directement et en dehors de la machine virtuelle Java Card.

A titre indicatif, dans la présente demande, la machine virtuelle Java Card est une machine virtuelle selon la version 3.1 de 2021 de Java Card Platform (consultable à l'URL https://docs.oracle.com/en/java/iavacard/3.1/index.html ). En particulier, les spécifications peuvent être les suivantes :

Java Card^{™} Platform
Virtual Machine Specification, Classic Edition
Version 3.1
February 2021

Java Card^{™} Platform
Runtime Environment Specification, Classic Edition
Version 3.1
February 2021

Java Card^{™} Platform
Application Programming Interface, Classic Edition
Version 3.1
February 2021

On notera que la version 3.1 est retro-compatible avec les précédentes de sorte que la machine virtuelle peut aussi être selon toute les versions précédentes.

Selon un mode de mise en œuvre particulier, les informations relatives aux arguments traités et/ou aux données délivrées par la fonction comprennent le type et/ou le nombre des arguments traités par la fonction.

Selon un mode de mise en œuvre particulier, les informations relatives aux arguments traités par la fonction comprennent le type et/ou le nombre des données délivrées par la fonction.

Selon un mode de mise en œuvre particulier, on met en œuvre les étapes de vérification du type, de détermination des informations relatives aux arguments traités et/ou aux données délivrées par la fonction, et d'observation à chaque réception d'une demande d'exécution de la fonction.

Ainsi, toutes les exécutions de la fonction seront concernées.

L'invention propose également un procédé de chargement d'une applet dans un dispositif électronique comprenant :
- une détection dans l'applet d'une fonction ayant un type donné,
- une détermination des arguments traités et/ou des données délivrées par la fonction,
- une élaboration d'informations relatives aux arguments traités et/ou aux données délivrées par la fonction,
- un ajout dans l'applet des informations relatives aux arguments traités et/ou aux données délivrées par la fonction pour obtenir une applet modifiée,
- un chargement de l'applet modifiée dans le dispositif électronique.

Le dispositif obtenu peut être celui capable de mettre en œuvre le procédé de traitement tel que décrit ci-avant selon tous ses modes de réalisation.

Selon un mode de mise en œuvre particulier, le type donné est une fonction qui s'exécute directement sur le processeur du dispositif électronique en dehors d'une machine virtuelle.

Selon un mode de mise en œuvre particulier, le type donné est une fonction native et la machine virtuelle est une machine virtuelle Java Card.

Selon un mode de mise en œuvre particulier, l'applet modifiée est une applet convertie Java Card.

Selon un mode de mise en œuvre particulier, les informations relatives aux arguments traités et/ou aux données délivrées par la fonction comprennent le type et/ou le nombre des arguments traités par la fonction.

Selon un mode de mise en œuvre particulier, les informations relatives aux arguments traités par la fonction comprennent le type et/ou le nombre des données délivrées par la fonction.

L'invention propose également un dispositif électronique apte à exécuter une fonction d'une applet comprenant :
- un module de réception d'une demande d'exécution de la fonction,
- un module de vérification d'un type associé à la fonction,
- un module de détermination, si le type de la fonction est un type donné, d'informations relatives aux arguments traités et/ou aux données délivrées par la fonction,
- un module d'observation du déroulement de la fonction et si la fonction traite des données en désaccord avec les informations relatives aux arguments traités et/ou aux données délivrées par la fonction, un module de traitement de sécurité du dispositif met en œuvre un traitement de sécurité.

Ce dispositif peut être configuré pour la mise en œuvre de tous les modes de mise en œuvre du procédé de traitement tel que décrit ci-avant.

Ce dispositif peut être une carte à puce, par exemple une carte à puce en accord avec la norme ISO 7816 dans n'importe laquelle de ses versions.

L'invention propose également un dispositif de chargement d'une applet dans un dispositif électronique comprenant :
- un module de détection dans l'applet d'une fonction ayant un type donné,
- un module de détermination des arguments traités et/ou des données délivrées par la fonction,
- un module d'élaboration d'informations relatives aux arguments traités et/ou aux données délivrées par la fonction,
- un module d'ajout dans l'applet des informations relatives aux arguments traités et/ou aux données délivrées par la fonction pour obtenir une applet modifiée,
- un module de chargement de l'applet modifiée dans le dispositif électronique.

Ce dispositif peut être configuré pour la mise en œuvre de tous les modes de mise en œuvre du procédé de chargement tel que décrit ci-avant.

L'invention propose également un programme d'ordinateur comportant des instructions pour l'exécution des étapes d'un procédé de traitement tel que défini ci-avant lorsque ledit programme est exécuté par un ordinateur.

L'invention propose également un programme d'ordinateur comportant des instructions pour l'exécution des étapes d'un procédé de chargement tel que défini ci-avant lorsque ledit programme est exécuté par un ordinateur.

A noter que les programmes d'ordinateur mentionnés dans le présent exposé peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention propose également un support d'enregistrement lisible par un ordinateur sur lequel est enregistré un programme d'ordinateur comprenant des instructions pour l'exécution des étapes d'un procédé de traitement tel que défini ci-avant.

L'invention propose également un support d'enregistrement lisible par un ordinateur sur lequel est enregistré un programme d'ordinateur comprenant des instructions pour l'exécution des étapes d'un procédé de chargement tel que défini ci-avant.

Les supports d'enregistrement (ou d'information) mentionnés dans le présent exposé peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] La figure 1 illustre schématiquement les étapes d'un procédé de traitement selon un exemple.
[Fig. 2] La figure 2 illustre schématiquement les étapes d'un procédé de chargement selon un exemple.
[Fig. 3] La figure 3 illustre schématiquement la conversion du code, son chargement, et son exécution.
[Fig. 4] La figure 4 illustre schématiquement un système avec un dispositif de chargement et un dispositif électronique.

### Description des modes de réalisation

On va maintenant décrire des procédés de traitement de l'exécution d'applet par un dispositif électronique de type carte à puce, fonctionnant avec un système d'exploitation Java Card bien connu en soi de l'homme du métier.

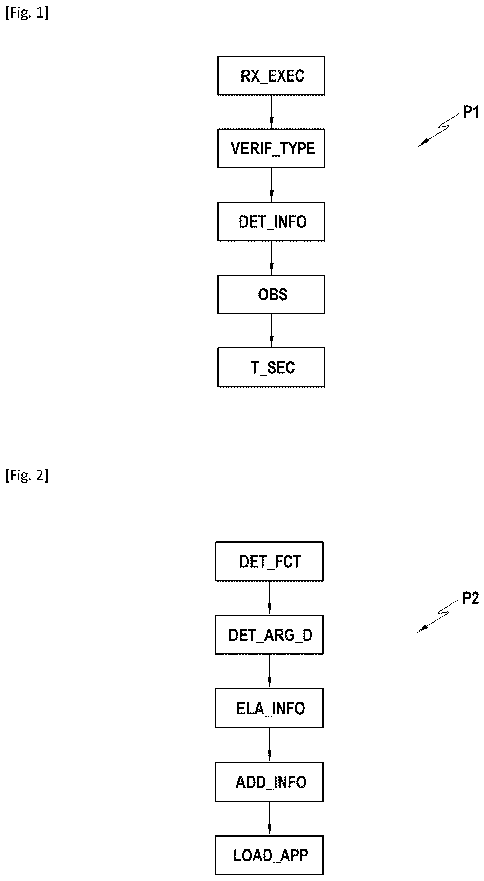

Le procédé P1 de la figure 1 sera mis en œuvre par un dispositif à microcircuit, par exemple un dispositif de type carte bancaire Java Card avec de ce fait une machine virtuelle Java Card pouvant exécuter des applets Java Card.

L'invention n'est néanmoins nullement limitée à ces cartes et trouve application dans les dispositifs qui exécutent des fonctions dans des applets.

Dans une première étape RX_EXEC, on reçoit une demande d'exécution de fonction, par exemple par le traitement habituel d'un Bytecode Java par la machine virtuelle Java Card, c'est-à-dire un flux d'octets binaires qui regroupe les instructions exécutables par la machine virtuelle.

Un indicateur (c'est-à-dire un « flag ») peut alors être lu pour déterminer si la fonction à exécuter est une fonction dite native, c'est-à-dire qui va s'exécuter en dehors de la machine virtuelle sur le microcircuit du dispositif. Cette étape est donc l'étape VERIF_TYPE de vérification du type de la fonction.

Si la fonction est une fonction native, on met en œuvre l'étape DET_lNFO de détermination des informations relatives aux arguments traités et/ou aux données délivrées par la fonction.

Par exemple, ces informations peuvent comprendre le type et/ou le nombre des arguments traités par la fonction. En outre, ces informations peuvent comprendre le type et/ou le nombre des données délivrées par la fonction.

A titre indicatif, ces informations peuvent être contenues dans un octet (ou plusieurs octets) dans lequel on peut coder de manière binaire les types (entier, tableau, reference, etc.). Cet octet est stocké directement dans un fichier d'applet converti, typiquement dans un entête de la fonction (« header » en anglais). On pourra choisir un codage en fonction de l'application. Le ou les plusieurs octets peuvent notamment être mémorisés dans le champ « nargs » de l'entête bien connu en Java Card.

L'étape OBS d'observation du déroulement de l'exécution de la fonction est alors mise en œuvre. La fonction est exécutée et on vérifie si elle est exécutée en accord avec ce qui est prévu par les informations obtenues à l'étape DET_lNFO.

Si un désaccord apparait, on met en œuvre un traitement de sécurité T_SEC, typiquement on renvoie une erreur d'exécution (« Runtime Error » en anglais).

Sur la figure 2, on a représenté un procédé P2 de chargement d'une applet dans un dispositif électronique. Ce procédé P2 peut être mis en œuvre avant le procédé P1 décrit en référence à la figure 1.

Ce procédé peut être mis en œuvre après la conversion en applet convertie prête à être chargée dans un dispositif Java Card.

Dans le code d'applet convertie, on détecte une fonction native (étape DET_FCT). Cela peut être mis en œuvre au moyen d'un indicateur ou « flag » iniquant « native » dans l'en-tête de la fonction.

Généralement, les fonctions natives sont identifiées dans le code converti comme telles.

Ensuite, on détermine dans le code converti les arguments traités et/ou les données délivrées par la fonction (étape DET_ARG_D). On pourra déterminer leur type, leur nombre, etc.

Ensuite, on élabore dans l'étape ELA_INFO des informations relatives aux arguments traités et/ou aux données délivrées par la fonction. On peut ainsi former un ou plusieurs octets en reprenant le codage mentionné ci-avant.

Dans l'étape ADD_INFO, on ajoute dans l'applet converti les informations obtenues à l'étape ELA_INFO, typiquement dans un entête et éventuellement dans un champ « nargs » en Java Card. On obtient ainsi une applet modifiée.

L'applet modifiée est chargée dans un dispositif électronique à l'étape LOAD_APP.

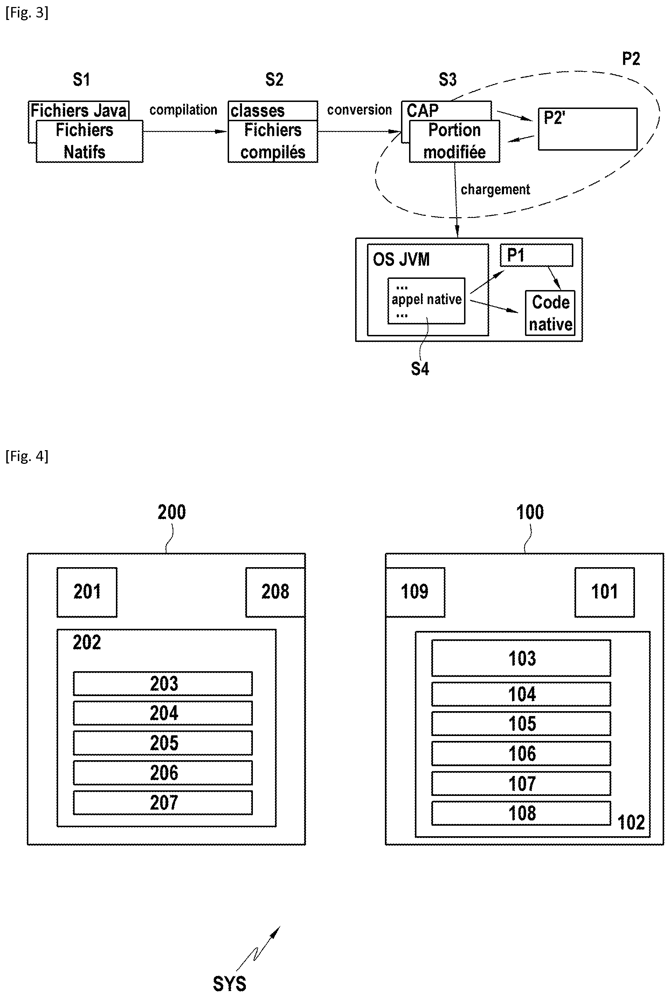

La figure 3 illustre schématiquement comment les procédé P1 et P2 décrits en référence aux figures 1 et 2 sont mis en œuvre.

Dans une étape S1, on élabore des fichiers Java et on utilise des fichiers avec des fonctions natives.

Dans une étape S2, on compile les fichiers de l'étape S1 pour obtenir des classes et des fichiers compilés.

Dans une étape S3, on converti les fichiers compilés en applets Java Card. On met en œuvre alors les étapes DET_FCT, DET_ARG_D, ELA_lNFO, et ADD_lNFO du procédé P2. Ces étapes forment le procédé référencé P2' sur la figure.

On peut alors charger le code modifié.

Dans la carte, un appel à l'exécution d'une fonction native est mis en œuvre à l'étape S4. Cela conduit à la mise en œuvre du procédé P1 de la figure 1.

Sur la figure 4, on a représenté un système SYS comprenant un dispositif électronique 100 de type carte à microcircuit Java Card, selon la norme ISO 7816.

Ce dispositif comporte un processeur 101 (ou microcircuit) et une mémoire non-volatile 102 dans laquelle des instructions 103 d'exécution d'une machine virtuelle Java Card sont mémorisées.

En outre, dans la mémoire non-volatile 102, on a enregistré des instructions qui, lorsqu'elles sont exécutées par le processeur 101 :
mettent en œuvre l'étape RX_EXEC :instructions 104 ; les instructions 104 forment donc un module pour mettre en œuvre l'étape RX_EXEC avec le processeur,
mettent en œuvre l'étape VERIF_TYPE : instructions 105 ; les instructions 105 forment donc un module pour mettre en œuvre l'étape VERIF_TYPE avec le processeur ,
mettent en œuvre l'étape DET_INFO : instructions 106 ; les instructions 106 forment donc un module pour mettre en œuvre l'étape DET_INFO avec le processeur,
mettent en œuvre l'étape OBS: instructions 107 ; les instructions 107 forment donc un module pour mettre en œuvre l'étape OBS avec le processeur,
mettent en œuvre l'étape T_SEC: instructions 108 ; les instructions 108 forment donc un module pour mettre en œuvre l'étape T_SEC avec le processeur.

En outre, le dispositif 100 comporte un organe de communication 109 par lequel des applets converties peuvent être chargées.

Ce chargement est mis en œuvre par un dispositif de chargement 200 du système SYS.

Ce dispositif comporte un processeur 201 (ou microcircuit) et une mémoire non-volatile 202.

Dans la mémoire non-volatile 202, on a enregistré des instructions qui, lorsqu'elles sont exécutées par le processeur 201 :
mettent en œuvre l'étape DET_FCT :instructions 203 ; les instructions 203 forment donc un module pour mettre en œuvre l'étape DET_FCT avec le processeur,
mettent en œuvre l'étape DET_ARG_D : instructions 204 ; les instructions 204 forment donc un module pour mettre en œuvre l'étape DET_ARG_D avec le processeur ,
mettent en œuvre l'étape ELA_INFO : instructions 205 ; les instructions 205 forment donc un module pour mettre en œuvre l'étape ELA_INFO avec le processeur,
mettent en œuvre l'étape ADD_INFO: instructions 206 ; les instructions 206 forment donc un module pour mettre en œuvre l'étape ADD_INFO avec le processeur,
mettent en œuvre l'étape LOAD_APP: instructions 207 ; les instructions 207 forment donc un module pour mettre en œuvre l'étape LOAD_APP avec le processeur.

En outre, le dispositif 200 comporte un organe de communication 208 par lequel des applets converties peuvent être envoyées à un dispositif apte à recevoir des applets converties.

## Revendications

1. Procédé de traitement de l'exécution d'une fonction d'une applet par un dispositif électronique comprenant :
- une réception (RX_EXEC) d'une demande d'exécution de la fonction,
- une vérification (VERIF_TYPE) d'un type associé à la fonction,
- si le type de la fonction est un type donné, on détermine (DET_INFO) des informations relatives aux arguments traités et/ou aux données délivrées par la fonction,
- on observe (OBS) le déroulement de la fonction et si la fonction traite des données en désaccord avec les informations relatives aux arguments traités et/ou aux données délivrées par la fonction, on met en œuvre un traitement de sécurité (T_SEC).

2. Procédé selon la revendication 1, dans lequel le type donné est une fonction qui s'exécute directement sur le processeur du dispositif électronique en dehors d'une machine virtuelle qui exécute l'applet.

3. Procédé selon la revendication 2, dans lequel le type donné est une fonction native et la machine virtuelle est une machine virtuelle Java Card.

4. Procédé selon l'une quelconque des revendications 1 à 3, dans lequel les informations relatives aux arguments traités et/ou aux données délivrées par la fonction comprennent le type et/ou le nombre des arguments traités par la fonction.

5. Procédé selon l'une quelconque des revendications 1 à 4, dans lequel les informations relatives aux arguments traités par la fonction comprennent le type et/ou le nombre des données délivrées par la fonction.

6. Procédé selon l'une quelconque des revendications 1 à 5, dans lequel on met en œuvre les étapes de vérification du type, de détermination des informations relatives aux arguments traités et/ou aux données délivrées par la fonction, et d'observation à chaque réception d'une demande d'exécution de la fonction.

7. Procédé de chargement d'une applet dans un dispositif électronique comprenant :
- une détection (DET_FCT) dans l'applet d'une fonction ayant un type donné,
- une détermination (DET_ARG_D) des arguments traités et/ou des données délivrées par la fonction,
- une élaboration (ELA_INFO) d'informations relatives aux arguments traités et/ou aux données délivrées par la fonction,
- un ajout (ADD_INFO) dans l'applet des informations relatives aux arguments traités et/ou aux données délivrées par la fonction pour obtenir une applet modifiée,
- un chargement (LOAD_APP) de l'applet modifiée dans le dispositif
électronique.

8. Procédé selon la revendication 7, dans lequel le type donné est une fonction qui s'exécute directement sur le processeur du dispositif électronique en dehors d'une machine virtuelle.

9. Procédé selon la revendication 8, dans lequel le type donné est une fonction native et la machine virtuelle est une machine virtuelle Java Card.

10. Procédé selon l'une quelconque des revendications 7 à 9, dans lequel l'applet modifiée est une applet convertie Java Card.

11. Procédé selon l'une quelconque des revendications 7 à 10, dans lequel les informations relatives aux arguments traités et/ou aux données délivrées par la fonction comprennent le type et/ou le nombre des arguments traités par la fonction.

12. Procédé selon l'une quelconque des revendications 7 à 11, dans lequel les informations relatives aux arguments traités par la fonction comprennent le type et/ou le nombre des données délivrées par la fonction.

13. Dispositif électronique apte à exécuter une fonction d'une applet comprenant :
- un module de réception (101, 104) d'une demande d'exécution de la fonction,
- un module de vérification (101, 105) d'un type associé à la fonction,
- un module de détermination (101, 106), si le type de la fonction est un type donné, d'informations relatives aux arguments traités et/ou aux données délivrées par la fonction,
- un module d'observation (101, 107) du déroulement de la fonction et si la fonction traite des données en désaccord avec les informations relatives aux arguments traités et/ou aux données délivrées par la fonction, un module de traitement de sécurité (101, 108) du dispositif met en œuvre un traitement de sécurité.

14. Dispositif de chargement d'une applet dans un dispositif électronique comprenant :
- un module de détection (201, 203) dans l'applet d'une fonction ayant un type donné,
- un module de détermination (201, 204) des arguments traités et/ou des données délivrées par la fonction,
- un module d'élaboration (201, 205) d'informations relatives aux arguments traités et/ou aux données délivrées par la fonction,
- un module d'ajout (201, 206) dans l'applet des informations relatives aux arguments traités et/ou aux données délivrées par la fonction pour obtenir une applet modifiée,
- un module de chargement (201, 207) de l'applet modifiée dans le dispositif
électronique.

15. Programme d'ordinateur comportant des instructions pour l'exécution des étapes d'un procédé de traitement selon l'une quelconque des revendications 1 à 6, lorsque ledit programme est exécuté par un ordinateur.

16. Support d'enregistrement lisible par un ordinateur sur lequel est enregistré un programme d'ordinateur comprenant des instructions pour l'exécution des étapes d'un procédé de traitement selon l'une quelconque des revendications 1 à 6.

17. Programme d'ordinateur comportant des instructions pour l'exécution des étapes d'un procédé de chargement selon l'une quelconque des revendications 7 à 12, lorsque ledit programme est exécuté par un ordinateur.

18. Support d'enregistrement lisible par un ordinateur sur lequel est enregistré un programme d'ordinateur comprenant des instructions pour l'exécution des étapes d'un procédé de chargement selon l'une quelconque des revendications 7 à 12.

## Patentansprüche

1. Verfahren zur Verarbeitung der Ausführung einer Applet-Funktion durch eine elektronische Vorrichtung, beinhaltend:
- Empfangen (RX_EXEC) einer Anfrage nach Ausführung der Funktion,
- Überprüfen (VERIF_TYPE) eines mit der Funktion assoziierten Typs,
- wenn der Typ der Funktion ein gegebener Typ ist, Bestimmen (DET_INFO) von Informationen bezüglich der durch die Funktion verarbeiteten Argumente und/oder bereitgestellten Daten,
- Beobachten (OBS) des Ablaufs der Funktion und, wenn die Funktion Daten verarbeitet, die im Widerspruch zu den Informationen bezüglich der durch die Funktion verarbeiteten Argumente und/oder bereitgestellten Daten stehen, Umsetzen einer Sicherheitsverarbeitung (T_SEC).

2. Verfahren nach Anspruch 1, wobei der gegebene Typ eine Funktion ist, die direkt auf dem Prozessor der elektronischen Vorrichtung ausgeführt wird, außerhalb einer virtuellen Maschine, die das Applet ausführt.

3. Verfahren nach Anspruch 2, wobei der gegebene Typ eine native Funktion ist und die virtuelle Maschine eine virtuelle Java-Card-Maschine ist.

4. Verfahren nach einem der Ansprüche 1 bis 3, wobei die Informationen bezüglich der durch die Funktion verarbeiteten Argumente und/oder bereitgestellten Daten den Typ und/oder die Anzahl der durch die Funktion verarbeiteten Argumente beinhalten.

5. Verfahren nach einem der Ansprüche 1 bis 4, wobei die Informationen bezüglich der durch die Funktion verarbeiteten Argumente den Typ und/oder die Anzahl der durch die Funktion bereitgestellten Daten beinhalten.

6. Verfahren nach einem der Ansprüche 1 bis 5, wobei die Schritte des Überprüfens des Typs, des Bestimmens der Informationen bezüglich der durch die Funktion verarbeiteten Argumente und/oder bereitgestellten Daten und des Beobachtens bei jedem Empfang einer Anfrage nach Ausführung der Funktion umgesetzt werden.

7. Verfahren zum Laden eines Applets in eine elektronische Vorrichtung, beinhaltend:
- Detektieren (DET_FCT), in dem Applet, einer Funktion, die einen gegebenen Typ aufweist,
- Bestimmen (DET_ARG_D) der durch die Funktion verarbeiteten Argumente und/oder bereitgestellten Daten,
- Erstellen (ELA_INFO) von Informationen bezüglich der durch die Funktion verarbeiteten Argumente und/oder bereitgestellten Daten,
- Hinzufügen (ADD_INFO), zu dem Applet, der Informationen bezüglich der durch die Funktion verarbeiteten Argumente und/oder bereitgestellten Daten, um ein modifiziertes Applet zu erhalten,
- Laden (LOAD _APP) des modifizierten Applets in die elektronische Vorrichtung.

8. Verfahren nach Anspruch 7, wobei der gegebene Typ eine Funktion ist, die direkt auf dem Prozessor der elektronischen Vorrichtung außerhalb einer virtuellen Maschine ausgeführt wird.

9. Verfahren nach Anspruch 8, wobei der gegebene Typ eine native Funktion ist und die virtuelle Maschine eine virtuelle Java-Card-Maschine ist.

10. Verfahren nach einem der Ansprüche 7 bis 9, wobei das modifizierte Applet ein konvertiertes Java-Card-Applet ist.

11. Verfahren nach einem der Ansprüche 7 bis 10, wobei die Informationen bezüglich der durch die Funktion verarbeiteten Argumente und/oder bereitgestellten Daten den Typ und/oder die Anzahl der durch die Funktion verarbeiteten Argumente beinhalten.

12. Verfahren nach einem der Ansprüche 7 bis 11, wobei die Informationen bezüglich der durch die Funktion verarbeiteten Argumente den Typ und/oder die Anzahl der durch die Funktion bereitgestellten Daten beinhalten.

13. Elektronische Vorrichtung, die dazu fähig ist, eine Funktion eines Applets auszuführen, beinhaltend:
- ein Modul zum Empfangen (101, 104) einer Anfrage nach Ausführung der Funktion,
- ein Modul zum Überprüfen (101, 105) eines mit der Funktion assoziierten Typs,
- ein Modul zum Bestimmen (101, 106) von, wenn der Typ der Funktion ein gegebener Typ ist, Informationen bezüglich der durch die Funktion verarbeiteten Argumente und/oder bereitgestellten Daten,
- ein Modul zum Beobachten (101, 107) des Ablaufs der Funktion und wobei, wenn die Funktion Daten verarbeitet, die im Widerspruch zu den Informationen bezüglich der durch die Funktion verarbeiteten Argumente und/oder bereitgestellten Daten stehen, ein Sicherheitsverarbeitungsmodul (101, 108) der Vorrichtung eine Sicherheitsverarbeitung umsetzt.

14. Vorrichtung zum Laden eines Applets in eine elektronische Vorrichtung, beinhaltend:
- ein Modul zum Detektieren (201, 203), in dem Applet, einer Funktion, die einen gegebenen Typ aufweist,
- ein Modul zum Bestimmen (201, 204) der durch die Funktion verarbeiteten Argumente und/oder bereitgestellten Daten,
- ein Modul zum Erstellen (201, 205) von Informationen bezüglich der durch die Funktion verarbeiteten Argumente und/oder bereitgestellten Daten,
- ein Modul zum Hinzufügen (201, 206), zu dem Applet, der Informationen bezüglich der durch die Funktion verarbeiteten Argumente und/oder bereitgestellten Daten, um ein modifiziertes Applet zu erhalten,
- ein Modul zum Laden (201, 207) des modifizierten Applets in die elektronische Vorrichtung.

15. Computerprogramm, das Anweisungen umfasst, die bei der Ausführung des Programms durch einen Computer die Schritte eines Verarbeitungsverfahrens nach einem der Ansprüche 1 bis 6 ausführen.

16. Computerlesbares Speichermedium, auf dem ein Computerprogramm gespeichert ist, das Anweisungen zum Ausführen der Schritte eines Verarbeitungsverfahrens nach einem der Ansprüche 1 bis 6 beinhaltet.

17. Computerprogramm, das Anweisungen umfasst, die bei der Ausführung des Programms durch einen Computer die Schritte eines Ladeverfahrens nach einem der Ansprüche 7 bis 12 ausführen.

18. Computerlesbares Speichermedium, auf dem ein Computerprogramm gespeichert ist, das Anweisungen zum Ausführen der Schritte eines Ladeverfahrens nach einem der Ansprüche 7 bis 12 beinhaltet.

## Claims

1. Method for handling the execution of an applet function by an electronic device comprising:
- receiving (RX_EXEC) a request to execute the function,
- verifying (VERIF_TYPE) a type associated with the function,
- if the type of the function is a given type, determining (DET_INFO) information relating to the arguments processed and/or to the data delivered by the function,
- observing (OBS) the progress of the function and, if the function processes data inconsistently with the information relating to the arguments processed and/or to the data delivered by the function, implementing a security process (T_SEC).

2. Method according to Claim 1, wherein the given type is a function which is executed directly on the processor of the electronic device outside of a virtual machine which executes the applet.

3. Method according to Claim 2, wherein the given type is a native function and the virtual machine is a Java Card virtual machine.

4. Method according to any one of Claims 1 to 3, wherein the information relating to the arguments processed and/or to the data delivered by the function comprise the type and/or the number of the arguments processed by the function.

5. Method according to any one of Claims 1 to 4, wherein the information relating to the arguments processed by the function comprise the type and/or the number of the data delivered by the function.

6. Method according to any one of Claims 1 to 5, wherein the steps of verifying the type, of determining the information relating to the arguments processed and/or to the data delivered by the function, and of observing each time a request to execute the function is received, are implemented.

7. Method for loading an applet in an electronic device comprising:
- detecting (DET_FCT) in the applet a function having a given type,
- determining (DET_ARG_D) the arguments processed and/or the data delivered by the function,
- generating (ELA_INFO) information relating to the arguments processed and/or to the data delivered by the function,
- adding (ADD_INFO) in the applet information relating to the arguments processed and/or to the data delivered by the function to obtain a modified applet,
- loading (LOAD_APP) the modified applet in the electronic device.

8. Method according to Claim 7, wherein the given type is a function which is executed directly on the processor of the electronic device outside of a virtual machine.

9. Method according to Claim 8, wherein the given type is a native function and the virtual machine is a Java Card virtual machine.

10. Method according to any one of Claims 7 to 9, wherein the modified applet is a Java Card converted applet.

11. Method according to any one of Claims 7 to 10, wherein the information relating to the arguments processed and/or to the data delivered by the function comprise the type and/or the number of the arguments processed by the function.

12. Method according to any one of Claims 7 to 11, wherein the information relating to the arguments processed by the function comprise the type and/or the number of the data delivered by the function.

13. Electronic device capable of executing an applet function comprising:
- a module (101, 104) for receiving a request to execute the function,
- a module (101, 105) for verifying a type associated with the function,
- a module (101, 106) for determining, if the type of the function is a given type, information relating to the arguments processed and/or to the data delivered by the function,
- a module (101, 107) for observing the progress of the function and, if the function processes data inconsistently with the information relating to the arguments processed and/or to the data delivered by the function, a security processing module (101, 108) of the device implements a security process.

14. Device for loading an applet in an electronic device comprising:
- a module (201, 203) for detecting in the applet a function having a given type,
- a module (201, 204) for determining the arguments processed and/or the data delivered by the function,
- a module (201, 205) for generating information relating to the arguments processed and/or to the data delivered by the function,
- a module (201, 206) for adding in the applet information relating to the arguments processed and/or to the data delivered by the function to obtain a modified applet,
- a module (201, 207) for loading the modified applet in the electronic device.

15. Computer program comprising instructions for the execution of the steps of a handling method according to any one of Claims 1 to 6, when said program is run by a computer.

16. Computer-readable storage medium on which is stored a computer program comprising instructions for the execution of the steps of a handling method according to any one of Claims 1 to 6.

17. Computer program comprising instructions for the execution of the steps of a loading method according to any one of Claims 7 to 12, when said program is run by a computer.

18. Computer-readable storage medium on which is stored a computer program comprising instructions for the execution of the steps of a loading method according to any one of Claims 7 to 12.
